# EUROPEAN PATENT SPECIFICATION

(11) **EP 3 105 479 B1**
(45) Date of publication and mention of the grant of the patent: **27.11.2019**
(21) Application number: 15705552.6
(22) Date of filing: 10.02.2015
(51) Int. Cl.: F16K 3/24, G05D 16/18

(54) **VALVE MEANS**
VENTILVORRICHTUNG
VANNE

(30) Priority: 10.02.2014 SE 1450137
(43) Date of publication of application: 21.12.2016
(73) Proprietor: Tetra Laval Holdings & Finance S.A., 1009 Pully (CH)
(72) Inventor: ANDERSSON, Knut-Ove, 222 35 Lund (SE)
(74) Representative: Tetra Pak - Patent Attorneys SE
(86) International application number: PCT/EP2015/052700
(87) International publication number: WO 2015/118162

(56) References cited:
- WO-A1-2012/171950
- WO-A1-2012/178132
- DE-B1- 2 139 136
- US-A- 4 208 031
- US-A- 4 742 987

## Description

### Technical Field

The present invention relates to a valve means, in particular to a valve means for regulating the flow of food stuff containing pulp or other particulate matter.

### Background

Constant pressure valves of the type referred to in the present disclosure may advantageously be used in food-processing applications, and they are commonly used in most heat treatment modules. Some examples include applications where a temperature exceeding 100 °C is used, in which case a pressurization of the system may be needed in order to avoid boiling. In such applications a counter pressure valve may be utilized. Another application relates to a situation where a particular pressure difference is to be maintained between two fluidly connected systems, e.g. the treated side and the untreated side of a pasteurization module. A third application is in a system where a particular and constant counter pressure is to be maintained in systems where the capacity or product routing may vary.

Positioning of the counter pressure valve may vary, yet for a typical food processing system a counter pressure valve may be arranged after a product outlet from a cooling section while before a filling machine, as well as in a return pipe from a filler to a balance tank.*

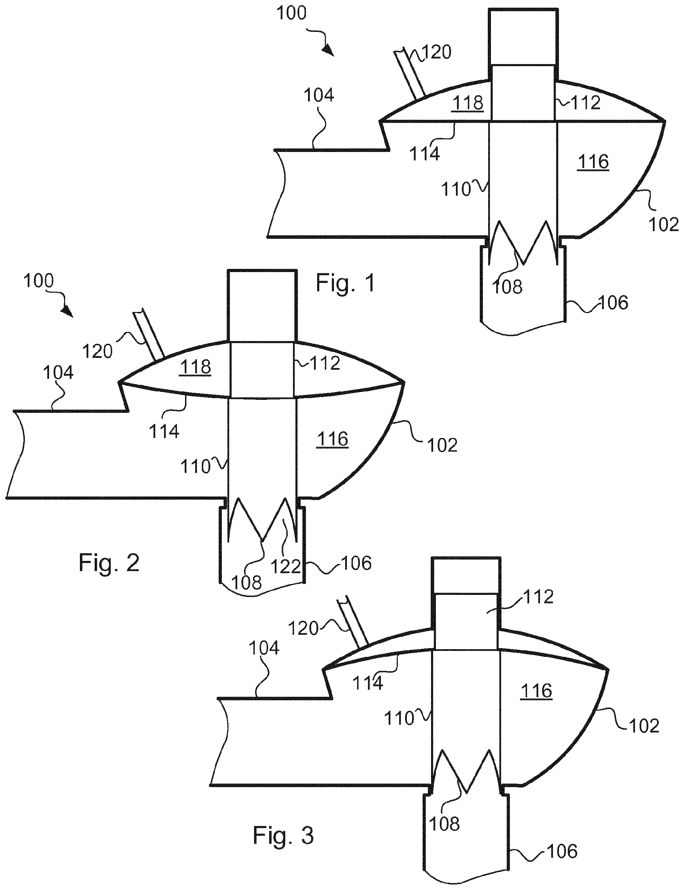

In the detailed description a constant pressure valve of prior art is described in some detail referring to Fig. 1. The present disclosure relates to an improved or optimized constant pressure valve. Further prior art is reflected by patent documents WO2012/178132A1, WO2012/171950A1, DE2139136A1, US4742987A and US4208031A.

### Summary

In order to eliminate or alleviate drawbacks with present constant pressure valves the present disclosure suggests a constant pressure valve having a housing with an inlet and an outlet, the outlet being selectively and adjustably blocked by a valve plug movable in an axial direction to adjust the blockage of the outlet. The valve plug has a single recess.

The use of a single recess enables an effective area or cross section being the same as the one of prior art valves while the continuous cross section available for passage of product is larger. One effect of this difference is that the interaction between the valve plug and particulate matter in the product, such as the pulp of a fruit juice, will be gentler.

The recess extends along only a part of the full circumference of the valve plug, creating a well defined recess.

The valve plug has a cylindrical cross section and the recess extends from a free end of the valve plug.

The recess is defined by a first area coinciding with a portion of the curved side surface of the cylinder and a second area coinciding with a portion of an end surface of the cylinder, wherein the first and the second area have a common interface. The common interface is the virtual border between the curved side surface of the cylindrical valve plug and the - circular - end surface of the cylindrical valve plug, basically saying that the recess may be an open recess rather than a through-hole through the cylindrical valve plug.

To give a few examples of the shape of the first area it may be defined as having a combination of any or all of the following features:
- two lateral sides extending from the free end of the valve plug and being connected with curved connector at their remote end,
- semicircular,
- semielliptical,
- triangular.

The curved connector may have any of the shapes, semicircular, semielliptical, triangular, triangular with a curved upper corner, etc.

A depth of the recess as measured from the first surface is decreasing fully or locally as a function of distance from the free end of the valve plug. This means that the depth may have a continuous decrease or that the depth may be decrease in some segments and be constant in other segments.

### Brief Description of the Drawings

Fig. 1 illustrates a prior art constant pressure valve in a schematic drawing thereof.
Fig. 2 illustrates the constant pressure valve of Fig. 1 in a first operating position.
Fig. 3 illustrates the constant pressure valve of Fig. 1 in a second operating position.
Fig. 4 is a schematic view of a constant pressure valve according to a first embodiment.
Fig. 5 is a view from the front and a view from the left of a valve plug that may be used in the constant pressure valve of Fig. 4.
Fig. 6 is a side view and an end view of a valve plug.

### Detailed Description of Embodiments

The operation of a constant pressure valve of the type used for food-processing application is well known per se. A prior art valve 100 is shown in Fig. 1, while the general working principle of the same will be explained in relation to Figs. 2 and 3. The valve of Fig. 1 comprises a housing 102 having a product inlet 104 and a product outlet 106, wherein a valve plug 108 is arranged to selectively block the product outlet. A valve stem 110 extends from the valve plug 108 to a valve guide 112 being slidably arranged in relation to the housing 102. The housing, the interior thereof, is operationally divided in two parts by a partition formed by a resilient membrane 114 sealingly attached to the valve stem/valve guide and an interior wall of the housing 102. At this point it should be emphasized that the description still is schematic, and that further information is readily available at the Internet or via providers of constant pressure valves. The membrane 114 divides the interior of the valve housing in a lower space 116 through which product will flow and an upper space 118. A fluid inlet 120 enables fluid connection between the upper space and a source of pressurized fluid, such as pressurized air, in order to control a pressure in the upper space 118.

The operational principle of the constant pressure valve is readily understood from the description of Figs. 2 and 3. Given a specific pressure in the upper space, Fig. 2 illustrates what will happen if the pressure in the lower space (product line) decreases. The resilient membrane, which may be made of EPDM rubber or other resilient material suitable for the purposes, will be pulled downwards and consequently the valve plug 108 will gradually choke the product outlet 106. This will cause the product pressure to increase. If the product pressure increases too much the membrane will instead be pushed upwards (again referring to the directions as illustrated in the drawings) effectively pulling the valve plug 108 with it and gradually open the product outlet 106, thus reducing the product pressure. The pressure in the upper chamber is adjustable and by setting to a specific level it will be possible to set a desired product pressure.

Looking a bit closer at the valve plug 108 it is of standard design, having a number of triangular recesses 122 and may be formed from a hollow or solid cylinder. The valve stem 110 is illustrated as an extension of the same cylinder, yet this is mainly for simplicity. In a practical situation the valve stem may have any suitable shape for transferring the movement from the membrane 114 to the valve plug 108. Furthermore, the membrane 114 is only schematically illustrated. In a practical situation its configuration is more complex, often comprising a multilayered structure. These details and more are readily available to the skilled person. The triangular recesses vouches for a wide control interval in terms of flow, e.g. as measured in m³/h (a measure often referred to as Kv)

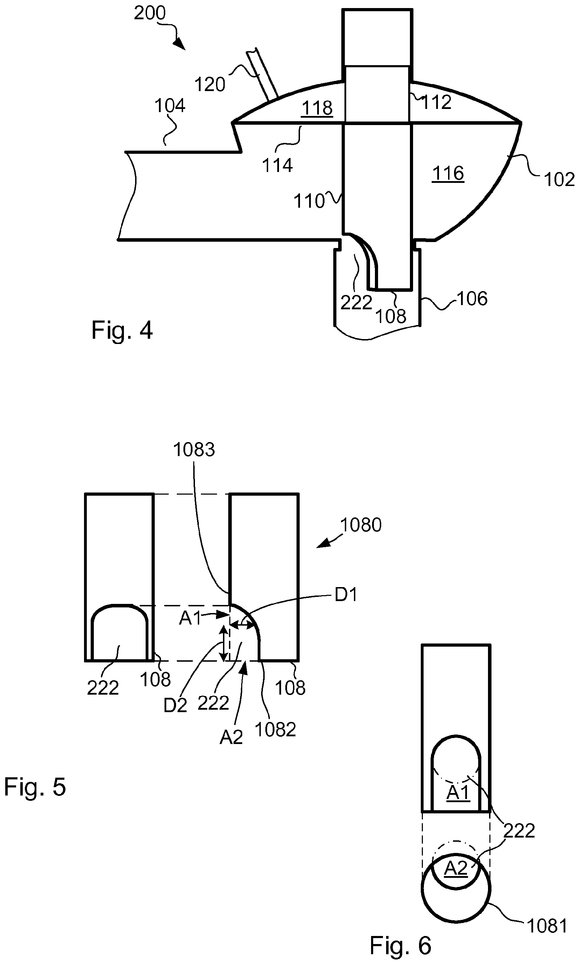

To address these issues the present disclosure suggests a valve plug having the configuration of Fig.4 and Fig. 5. The features of Fig. 4 should be readily understood from the previous description of Figs. 1-3. In the constant pressure valve 200 of Fig. 4 the main difference is found in the valve plug 208, which for that reason has been given a different reference numeral, the other reference numerals for like components being the same as in Figs. 1-3. Instead of having a number of recesses the embodiment of Fig. 4 only have the one 222. Furthermore this recess 222 has a smoothly curved design.

Fig. 5 illustrates the valve plug 208 in some closer detail.

Fig. 6 illustrates the valve plug from the side and from below, and from that it is readily understood that the shape of the recess 222 may be defined by a first area A1 coinciding with a portion of the curved side surface of the cylinder and a second area A2 coinciding with a portion of an end surface of the cylinder, wherein the first and the second area have a common interface. These areas are then connected in a suitable way in order to form the volume of the recess 222. What is considered as being "a suitable" way may depend on the application. For example, the shape as illustrated in Fig. 6 could be accomplished by drilling (or milling) a circular hole with a first radius from below, in combination with drilling (or milling) a circular hole with a second radius (which may or may not equal the first radius) from one side to form the arcuate shape of the first area. However, the recess may also be machined in another, more or less complex, manner depending on the material used for the valve plug, the requirements of the interior surfaces of the recess etc. Given the specified task a person skilled in machining, or moulding or milling could with relative ease suggest a cost efficient way of accomplishing the recess. The roughness of the surface of the recess may be matter more influenced by cleanability than of performance. For applications where the valve plug is made from a hollow cylinder it may be in most cases be sufficient to perform machining of the first area only, while the second area will have a generally circular shape defined by the hole in the cylinder and the interface with the first area.

The shape of the first area, in its interaction with the outlet, will have the greatest impact on the performance of the valve plug in regard of the variability. Some examples of the shape includes semicircular, semielliptical, triangular, rectangular with rounded upper corners, two rectilinear lateral side edges extending from the free end of the valve plug and having a curved connector connecting the lateral side edges so as to form a somewhat rounded and/or tapered end. In a more general aspect it may be beneficial to have a single first area (only one recess) having a shape being tapered in the remote end, while still avoiding sharp edges, such as to avoid to the largest possible extent damage of particulate matter contained in the product, one example being the pulp of a fruit juice.

The first area will be connected to the second area, which is self evident from the definition of the first and the second area, respectively. How these areas are connected, i.e. the interior design of the recess may vary, as mentioned above. It is foreseeable to have a smoothly curved surface to enable an even flow and enable good cleanability, yet it may also be possible to have a gradually decreasing depth as measured from the first area so as to increase a throttling effect as the valve is closing. The depth should then decrease as a function of the distance from the free end of the cylinder, and this does not exclude segments having a constant depth. In this way a cross section available for the flow as it passes the recess may assist in throttling the flow, such that the full pressure drop is not accomplished by the first area.

A material commonly used within the field of food processing is stainless steel, and this may be a suitable material for use in the valve plug.

## Claims

1. A constant pressure valve (200) having a housing (102) with an inlet (104) and an outlet (106), the outlet (106) being selectively and adjustably blocked by a valve plug (108) movable in an axial direction of the valve plug (108) to adjust the blockage of the outlet (106), wherein
the valve plug (108) has a single recess (222),
the recess (222) extends along only a part of a full circumference (1081) of the valve plug (108),
the valve plug (108) has a cylindrical shape and
the recess (222) extends from a free end (1082) of the valve plug (108), **characterized in that**
the recess (222) is defined by a first area (A1) coinciding with a portion of a curved side surface (1083) of the cylindrical shape and a second area (A2) coinciding with a portion of the free end (1082) of the cylindrical shape, wherein the first and the second areas (A1, A2) have a common interface,
a depth (D1) of the recess (222) as measured from the side surface (1083) is decreasing fully or locally as a function of a distance (D2) from the free end (1082) of the valve plug (108), and
the outlet (106) is substantially perpendicular to the inlet (104) and the valve plug (108) is movable in the axial direction of the valve plug (108) and the outlet (106) towards the outlet (106) to gradually choke the outlet (106) and away from the outlet to gradually open the outlet (106).

2. The constant pressure valve of claim 1, wherein the first area (A1) may be defined as having a combination of any or all of the following features:
- two lateral sides extending from the free end of the valve plug (108) and being connected with curved connector at their remote end,
- semicircular,
- semielliptical,
- triangular.

## Patentansprüche

1. Konstantdruckventil (200), das ein Gehäuse (102) mit einem Einlass (104) und einem Auslass (106) aufweist, wobei der Auslass (106) selektiv und einstellbar durch einen Ventilstopfen (108) blockiert wird, der in einer Axialrichtung des Ventilstopfens (108) bewegbar ist, um die Blockierung des Auslasses (106) einzustellen, wobei der Ventilstopfen (108) eine einzelne Aussparung (222) aufweist,
sich die Aussparung (222) entlang lediglich eines Teils eines vollständigen Umfangs (1081) des Ventilstopfens (108) erstreckt,
der Ventilstopfen (108) eine Zylinderform aufweist und sich die Ausnehmung (222) von einem freien Ende (1082) des Ventilstopfens (108) aus erstreckt,
**dadurch gekennzeichnet, dass**
die Aussparung (222) durch einen ersten Bereich (A1), der sich mit einem Abschnitt einer gekrümmten Seitenfläche (1083) der Zylinderform deckt, und einen zweiten Bereich (A2) definiert ist, der sich mit einem Abschnitt des freien Endes (1082) der Zylinderform deckt, wobei der erste und der zweite Bereich (A1, A2) eine gemeinsame Grenzfläche aufweisen,
eine von der Seitenfläche (1083) aus gemessene Tiefe (D1) der Ausnehmung (222) in Abhängigkeit von einer Entfernung (D2) von dem freien Ende (1082) des Ventilstopfens (108) vollständig oder lokal abnimmt, und
der Auslass (106) im Wesentlichen orthogonal zu dem Einlass (104) liegt und der Ventilstopfen (108) in Axialrichtung des Ventilstopfens (108) und des Auslasses (106) in Richtung des Auslasses (106), um den Auslass (106) allmählich abzudrosseln, und von dem Auslass weg bewegbar ist, um den Auslass (106) allmählich zu öffnen.

2. Konstantdruckventil nach Anspruch 1, wobei der erste Bereich (A1) als eine Kombination aus beliebigen oder sämtlichen der folgenden Merkmale aufweisend definiert werden kann:
- zwei laterale Seiten, die sich von dem freien Ende des Ventilstopfens (108) aus erstrecken und an ihrem entfernten Ende mit einem gekrümmten Verbindungsstück verbunden sind,
- halbkreisförmig,
- halbelliptisch,
- dreieckig.

## Revendications

1. Vanne à pression constante (200) comportant un logement (102) ayant une entrée (104) et une sortie (106), la sortie (106) étant bloquée de façon sélective et réglable par un clapet (108) mobile dans une direction axiale du clapet (108) pour régler le blocage de la sortie (106), dans laquelle
le clapet (108) comporte un évidement unique (222),
l'évidement (222) s'étend seulement sur une partie de la circonférence totale (1081) du clapet (108),
le clapet (108) présente une forme cylindrique, et
l'évidement (222) s'étend à partir d'une extrémité libre (1082) du clapet (108),
**caractérisée en ce que**
l'évidement (222) est défini par une première surface (A1) coïncidant avec une partie d'une surface latérale courbe (1083) de la forme cylindrique et une seconde surface (A2) coïncidant avec une partie de l'extrémité libre (1082) de la forme cylindrique, dans laquelle les première et seconde surfaces (A1, A2) possèdent une interface commune,
une profondeur (D1) de l'évidement (222) mesurée depuis la surface latérale (1083) diminue complètement ou localement en fonction d'une distance (D2) depuis l'extrémité libre (1082) du clapet (108), et
la sortie (106) est sensiblement perpendiculaire à l'entrée (104) et le clapet (108) est mobile dans la direction axiale du clapet (108) et de la sortie (106) en direction de la sortie (106) pour obstruer graduellement la sortie (106) et à l'opposé de la sortie pour ouvrir graduellement la sortie (106).

2. Vanne à pression constante selon la revendication 1, dans laquelle la première surface (A1) peut être définie comme présentant une combinaison d'une quelconque ou de toutes les caractéristiques suivantes :
deux côtés latéraux s'étendant à partir d'une extrémité libre du clapet (108) et raccordés par un assembleur courbe à leur extrémité éloignée,
semi-circulaire,
semi-elliptique,
triangulaire.
